# EUROPEAN PATENT APPLICATION

(11) **EP 4 332 774 A1**
(43) Date of publication of application: **06.03.2024**
(21) Application number: 23194204.6
(22) Date of filing: 30.08.2023
(51) Int. Cl.: G06F 11/07, G05B 23/02, G06F 11/30

(54) **INFORMATION MANAGEMENT APPARATUS, INFORMATION MANAGEMENT METHOD, AND INFORMATION MANAGEMENT PROGRAM**

(30) Priority: 05.09.2022 JP 2022140741
(71) Applicant: Yokogawa Electric Corporation, Tokyo 180-8750 (JP)
(72) Inventor: URABE, Hiroo, Musashino-shi, Tokyo, 180-8750 (JP); YOSHIDA, Yusaku, Musashino-shi, Tokyo, 180-8750 (JP)
(74) Representative: Winter, Brandl - Partnerschaft mbB

(57) **Abstract**

An application server (10) stores therein setting information in which a notification target to be notified to each of users is set for each user of an application related to a system, and notifies, when an abnormality occurs in the system, an administrator of the system of the abnormality and also controls the notification of the abnormality for each of the users, based on the setting information.

## Description

### FIELD

The present invention relates to an information management apparatus, an information management method, and an information management program.

### BACKGROUND

Web applications (simply "applications" as appropriate) have been known in the art that collect plant information from plant equipment installed in a plant and perform health checks indicating the safe operating status of the plant. For example, the relevant applications notify administrators and users of threshold judgment results indicating abnormal data values and error information indicating the occurrence of system failures. The related technologies are described, for example, in Japanese Patent Application Laid-open No. 2016-091434.

However, conventional technology has difficulty in effectively providing information about the system to each user of the application. For example, the conventional technology has difficulty in selecting information requested by users and providing it as alert information because threshold judgment results and error information are not centrally managed.

The present invention is made in view of the above, and an object thereof is to effectively provide information about a system to users.

### SUMMARY

According to an aspect of the embodiments, an information management apparatus includes, a memory unit configured to store setting information in which a notification target to be notified to each of users is set, for each user of an application related to a system, and a notification unit configured to notify, when an abnormality occurs in the system, an administrator of the system of the abnormality and also to control notification of the abnormality for each of the users, based on the setting information.

According to an aspect of the embodiments, an information management method by which a computer executes processing includes, storing setting information in which a notification target to be notified to each of users is set for each user of an application related to a system, and notifying, when an abnormality occurs in the system, an administrator of the system of the abnormality, and also controlling notification of the abnormality for each of the users, based on the setting information.

According to an aspect of the embodiments, an information management program causing a computer to execute processing includes, storing setting information in which a notification target to be notified to each of users is set for each user of an application related to a system, and notifying, when an abnormality occurs in the system, an administrator of the system of the abnormality, and also controlling notification of the abnormality for each of the users, based on the setting information.

### BRIEF DESCRIPTION OF THE DRAWINGS

FIG. 1 is a diagram illustrating an exemplary configuration of an information management system according to an embodiment;
FIG. 2 is a block diagram illustrating an exemplary configuration of devices according to the embodiment;
FIG. 3 is a diagram illustrating an example of a network map according to the embodiment;
FIG. 4 is a diagram illustrating an example of a configuration information memory unit of an application server according to the embodiment;
FIG. 5 is a diagram illustrating an example of a judgment information memory unit of the application server according to the embodiment;
FIG. 6 is a diagram illustrating an example of an error information memory unit of the application server according to the embodiment;
FIG. 7 is a diagram illustrating an example of a setting information memory unit of the application server according to the embodiment;
FIG. 8 is a diagram illustrating a specific example of a display screen of an administrator terminal according to the embodiment;
FIG. 9 is a diagram illustrating a specific example of a display screen of a user terminal according to the embodiment;
FIG. 10 is a sequence diagram illustrating an example of a flow of information management processing according to the embodiment; and
FIG. 11 is a schematic for explaining an exemplary hardware configuration.

### DESCRIPTION OF EMBODIMENTS

An information management apparatus, an information management method, and an information management program according to an embodiment of the present invention will be described below in detail with reference to the drawings. The present invention is not limited by the embodiment described below.

### Embodiment

The following describes, in order, a configuration of an information management system 100, a configuration of devices, and a flow of processing, and finally, the effects of the embodiment.

### 1. Configuration of Information Management System 100

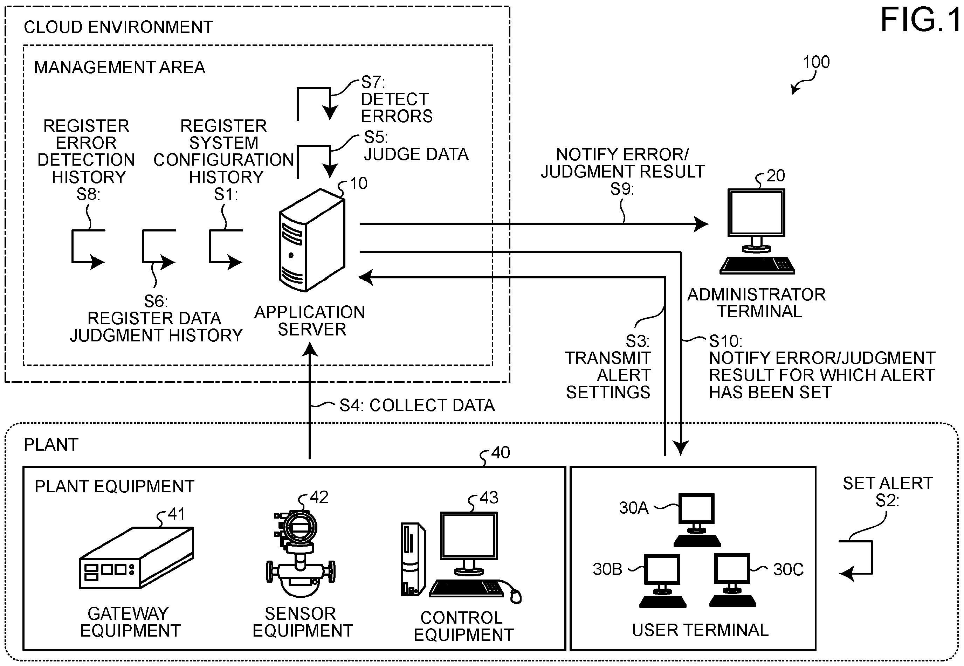

FIG. 1 is used to illustrate in detail the configuration of the information management system 100 according to the embodiment. FIG. 1 is a diagram illustrating an exemplary configuration of the information management system 100 according to the embodiment. The following describes, in order, an exemplary configuration of the entire information management system 100, the processing of the information management system 100, problems with an information management system of the reference technology, and finally, the effects of the information management system 100. Although the embodiment uses, as an example, factory production remote monitoring using plant equipment, which is a device installed in a plant, the embodiment does not limit devices or fields of use, and can be applied to environmental measurement remote monitoring such as power monitoring, wind power generation, water and sewage monitoring, and river monitoring.

### 1-1. Exemplary Configuration of Entire Information Management System 100

The information management system 100 has an application server 10, which is an information management apparatus, an administrator terminal 20, user terminals 30 (30A, 30B, 30C), and plant equipment 40 (gateway equipment 41, sensor equipment 42, control equipment 43). Herein, the application server 10 is built in a management area created in a cloud environment. The administrator terminal 20 is a terminal device used by an application administrator (simply "administrator" as appropriate) who manages the entire information management system 100. The user terminal 30 is a terminal device used by application users (simply "users" as appropriate) who use applications executed by the information management system 100.

The information management system 100 illustrated in FIG. 1 may include a plurality of the application servers 10 and a plurality of the administrator terminals 20. The application server 10 is not limited to server devices built in a cloud environment, but may be a physical server, virtual machine, or container, for example, built in an on-premise environment.

### 1-2. Processing of Entire Information Management System 100

The entire processing of the above information management system 100 will now be described. The following steps S1 to S10 may be performed in a different order. Some of the following steps S1 to S10 may be omitted.

### 1-2-1. System Configuration History Registration Processing

The application server 10 registers a system configuration history (step S1). For example, the application server 10 stores therein structural information such as a network map illustrating a hierarchical structure of a system transmitted from the administrator terminal 20. At this time, the application server 10 adds and stores therein new structural information each time the structural information is changed due to the addition of a device or other reason.

### 1-2-2. Alert Setting Input Processing

The user terminal 30 receives input for alert settings (step S2). For example, the user terminal 30 receives input for the type of error or the type of data judgment result, for example, from each user, as a notification target to be received by the user as an alert notification. At this time, the user terminal 30 stores therein the alert settings that have been received for input as setting information.

### 1-2-3. Alert Setting Transmission Processing

The user terminal 30 transmits alert settings to the application server 10 (step S3). For example, the user terminal 30 transmits setting information to the application server 10. At this time, the application server 10 stores therein the received setting information.

### 1-2-4. Data Collection Processing

The application server 10 collects data from the plant equipment 40 (step S4). For example, the application server 10 collects plant information, such as communication data, measurement data, and control data, from the gateway equipment 41, the sensor equipment 42, and the control equipment 43 installed in the plant.

### 1-2-5. Data Judgment Processing

The application server 10 judges whether data is normal or abnormal (step S5). For example, the application server 10 judges that the plant information is an abnormal value if the measurement data collected from the sensor equipment 42 exceeds a threshold.

### 1-2-6. Data Judgment History Registration Processing

The application server 10 registers a data judgment history (step S6). For example, the application server 10 stores therein judgment information such as the numeric value of the judged abnormal value, reason for occurrence, time of occurrence, and location of occurrence. At this time, the application server 10 adds and stores therein judgment information each time the application server 10 judges that information is an abnormal value at each of plants and devices.

### 1-2-7. Error Detection Processing

The application server 10 detects errors that occur in the system (step S7). For example, the application server 10 detects failures (errors) related to the system, such as failures of the plant equipment 40, tight communication networks, application software defects, and lack of cloud infrastructure resources.

### 1-2-8. Error Detection History Registration Processing

The application server 10 registers an error detection history (step S8). For example, the application server 10 stores therein error information such as the type of detected error, reason for occurrence, time of occurrence, and location of occurrence. At this time, the application server 10 adds and stores therein error information each time the application server 10 detects an error in the system.

### 1-2-9. Error/Judgment Result Notification Processing

The application server 10 notifies the administrator terminal 20 of an error/judgment result (step S9). For example, the application server 10 transmits all judged abnormal values and all detected errors to the administrator terminal 20. At this time, the administrator terminal 20 displays the received error/judgment result. The application server 10 can also notify the administrator terminal 20 of configuration information, such as a network map of the system in which the error or abnormal value has occurred, upon the administrator's request.

### 1-2-10. Alert Notification Processing

The application server 10 notifies the user terminal 30 of an alert (step S10). For example, the application server 10 transmits, to the user terminal 30, alert information on the judged abnormal values and detected errors for notification targets that the user has set as alerts. At this time, the user terminal 30 displays the received alert.

### 1-3. Information Management Processing of Reference Technology

The following describes an overview of the information management processing as the reference technology, and then the problems with the reference technology.

### 1-3-1. Overview of Information Processing of Reference Technology

In the information management processing of the reference technology, a system administrator receives abnormal values and device errors via an application. In the event of a system error in hardware or cloud infrastructure, for example, the administrator will look at logs and error displays to determine the cause of the error. At this time, the administrator needs to infer from the logs and error occurrences to find out how the error occurred in the past.

### 1-3-2. Problems with Information Processing of Reference Technology

The information management processing of the reference technology has the following problems. First, the information management processing of the reference technology does not allow users to select the type of error that has occurred and receive alert notifications. Second, the information management processing of the reference technology requires the system administrator to know the status of all systems and detect errors. Third, in the information management processing of the reference technology, the system administrator has difficulty in analyzing the occurrence of errors before the change if the system configuration has been changed.

### 1-4. Effects of Information Management System 100

The following describes an overview of the information management system 100 according to the embodiment, and then improvements to the information management system 100.

### 1-4-1. Overview of Information Management System 100

The information management system 100 performs the following processes. First, the application server 10 registers a system configuration history. Second, the user terminal 30 receives input for alert settings. Third, the user terminal 30 transmits alert settings to the application server 10. Fourth, the application server 10 collects data from the plant equipment 40. Fifth, the application server 10 judges whether data values are normal or abnormal. Sixth, the application server 10 registers a data judgment history. Seventh, the application server 10 detects errors that occur in the system. Eighth, the application server 10 registers an error detection history. Ninth, the application server 10 notifies the administrator terminal 20 of an error/judgment result. Tenth, the application server 10 notifies the user terminal 30 of an alert.

### In the information management system 100, the application server 10 can search for the history of past system configurations even if the system configuration has been changed. Similarly, the application server 10 can search for the history of past errors and alerts.

1-4-2. Improvements to Information Management System 100

The following improvements can be expected in the information management system 100. First, users can select data threshold judgment results and error information to receive notifications as alerts. Second, the administrator can centrally manage all threshold judgment results and error information, which facilitates trouble analysis. Third, even if the system configuration has been changed, the administrator can analyze errors that occurred during past system configurations by reproducing and confirming the system configuration at the time the error occurred.

### 2. Configuration of Devices in Information Management System 100

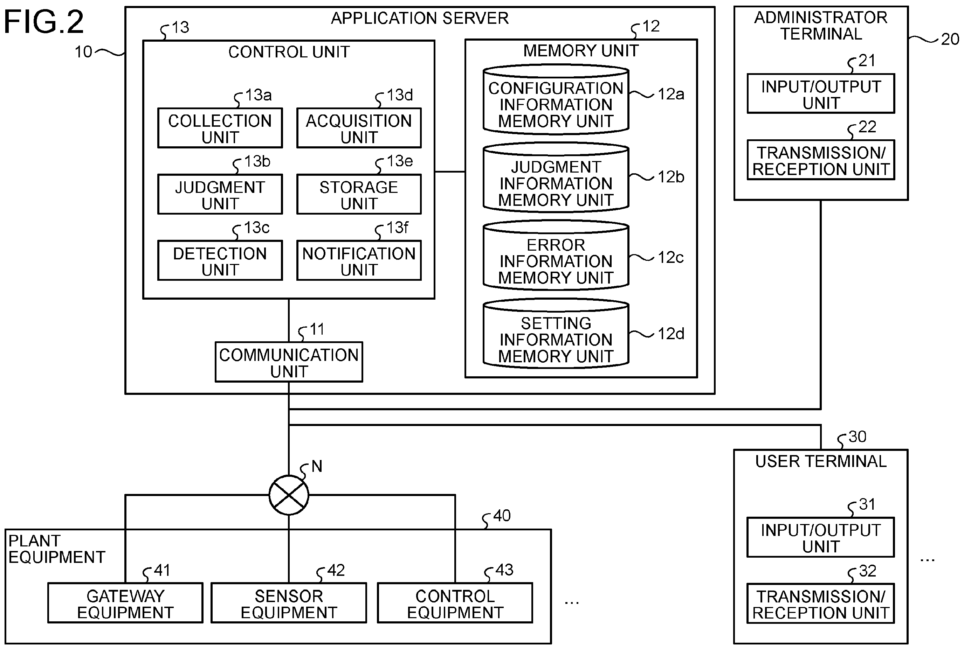

FIG. 2 is used to illustrate a functional configuration of devices in the information management system 100 illustrated in FIG. 1. FIG. 2 is a block diagram illustrating an exemplary functional configuration of the devices according to the embodiment. The following describes an exemplary configuration of the entire information management system 100 according to the embodiment, and then describes in detail exemplary configurations of the application server 10, the administrator terminal 20, the user terminal 30, and the plant equipment 40 according to the embodiment.

### 2-1. Exemplary Configuration of Entire Information Management System 100

As illustrated in FIG. 2, the information management system 100 has the application server 10, the administrator terminal 20, the user terminals 30, and a plurality of pieces of the plant equipment 40 (gateway equipment 41, sensor equipment 42, control equipment 43). The application server 10, the administrator terminal 20, and the user terminal 30 are communicatively connected by a predetermined communication network in a cloud environment. The plant equipment 40 is communicatively connected by a communication network N, such as a cellular phone network.

The application server 10 is not limited to server devices built in a cloud environment, but may be a physical server, virtual machine, or container, for example, built in an on-premise environment.

### 2-2. Exemplary Configuration of Application Server 10

First, FIG. 2 is used to illustrate an exemplary configuration of the application server 10, which is an information management apparatus. The application server 10 has a communication unit 11, a memory unit 12, and a control unit 13. The application server 10 may have an input unit (for example, keyboard or mouse) for receiving various operations from a system provider of the information management system 100 and a display unit (for example, liquid crystal display) for displaying various information.

### 2-2-1. Communication Unit 11

The communication unit 11 is responsible for data communication with other devices. For example, the communication unit 11 performs data communication with communication devices via routers, for example. The communication unit 11 can also perform data communication with an operator's terminal (not illustrated).

### 2-2-2. Memory Unit 12

The memory unit 12 stores therein various information that is referred to when the control unit 13 operates, as well as various information acquired when the control unit 13 operates. The memory unit 12 has a configuration information memory unit 12a, a judgment information memory unit 12b, an error information memory unit 12c, and a setting information memory unit 12d. Herein, the memory unit 12 can be implemented, for example, as a semiconductor memory element such as random access memory (RAM) or flash memory, or a memory such as a hard disk or optical disk. In the example in FIG. 2, the memory unit 12 is installed inside the application server 10, but it may be installed outside the application server 10, or a plurality of memory units may be installed.

### 2-2-2-1. Configuration Information Memory Unit 12a

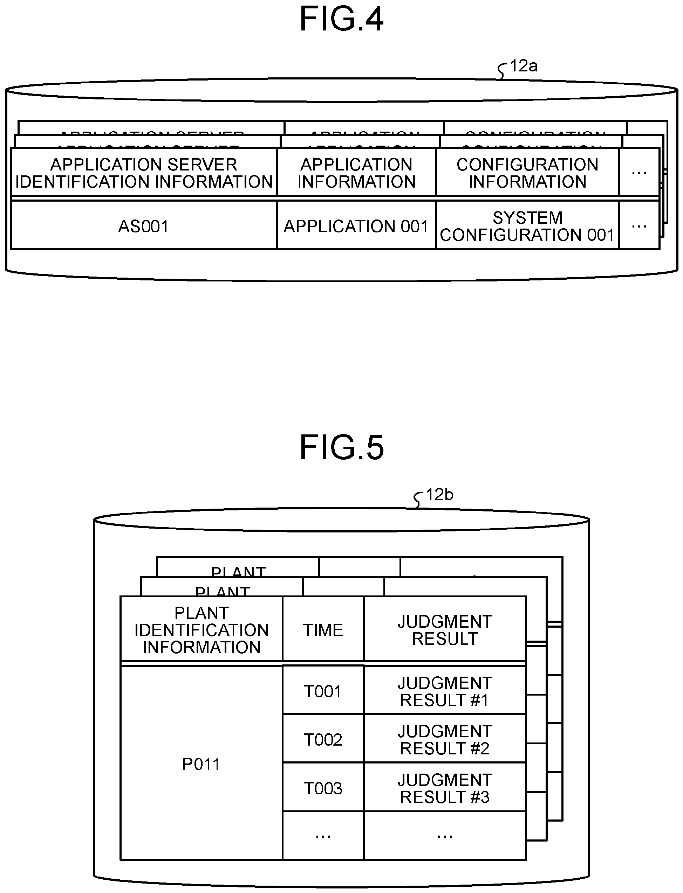

The configuration information memory unit 12a stores therein structural information on the hierarchical structure of the system, which is stored by a storage unit 13e of the control unit 13 described below. Herein, FIG. 4 is used to illustrate an example of the information stored by the configuration information memory unit 12a. FIG. 4 is a diagram illustrating an example of the configuration information memory unit 12a of the application server 10 according to the embodiment. In the example in FIG. 4, the configuration information memory unit 12a has items such as "application server identification information," "application information," and "configuration information."

The "application server identification information" indicates identification information for identifying the application server 10, and is, for example, an identification number or identification symbol of the application server 10. The "application information" indicates identification information for identifying applications, and is, for example, an identification number or identification symbol of an application executed by the application server 10. The "configuration information" indicates the hierarchical structure of the system managed by the application server 10 and is, for example, a network map for understanding the hierarchical relation, connection relation, and the like of the plant equipment 40 included in the system.

In other words, FIG. 4 illustrates an example in which, for the application server 10 identified by the application server identification information "AS001 ", the application identified by the application identification information "application 001" is installed, and the configuration information of the system managed by the application server 10 is "system configuration 001." The configuration information stored by the configuration information memory unit 12a is generated each time the hierarchical structure of the system is changed, and is accumulated as a history of the hierarchical structure.

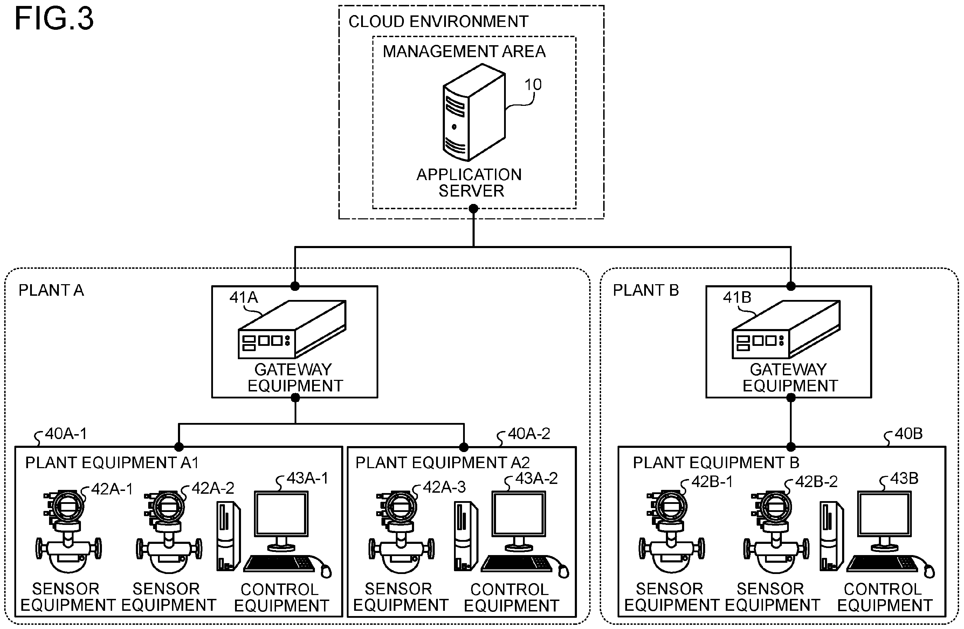

Herein, FIG. 3 is used to illustrate the network map, which is a specific example of configuration information. FIG. 3 is a diagram illustrating an example of the network map according to the embodiment. As illustrated in FIG. 3, the network map is information that indicates the hierarchical relation and connection relation of the plant equipment 40, such as the gateway equipment 41, the sensor equipment 42, and the control equipment 43 that are connected to the application server 10. In other words, in the example in FIG. 3, in "plant A," gateway equipment 41A is hierarchically connected to plant equipment 40A-1 (sensor equipment 42A-1, sensor equipment 42A-2, control equipment 43A-1) illustrated as "plant equipment A1" and plant equipment 40A-2 (sensor equipment 42A-3, control equipment 43A-2) illustrated as "plant equipment A2." Similarly, in "plant B," gateway equipment 41B is hierarchically connected to plant equipment 40B (sensor equipment 42B-1, sensor equipment 42B-2, control equipment 43B) illustrated as "plant equipment B."

### 2-2-2-2. Judgment Information Memory Unit 12b

The judgment information memory unit 12b stores therein judgment information output by a judgment unit 13b of the control unit 13 described below. Herein, FIG. 5 is used to illustrate an example of the information stored by the judgment information memory unit 12b. FIG. 5 is a diagram illustrating an example of the judgment information memory unit 12b of the application server 10 according to the embodiment. In the example in FIG. 5, the judgment information memory unit 12b has items such as "plant identification information," "time," and "judgment result."

The "plant identification information" indicates identification information for identifying the plant, and is, for example, an identification number or identification symbol of the plant managed by the application server 10. The "time" indicates the time when the data of the plant equipment 40 was judged to be normal or abnormal, and is expressed, for example, as the year, month, day, hour, minute, and second when the data is judged to be abnormal. The "judgment result" indicates the result of judging whether the data of the plant equipment 40 was normal or abnormal, and is, for example, information including the identification number of the plant equipment 40 judged to be abnormal, the numeric value of the data, and the degree of danger.

In other words, FIG. 5 illustrates an example in which the judgment result at time "T001" is "judgment result #1," the judgment result at time "T002" is "judgment result #2," the judgment result at time "T003" is "judgment result #3," ... for the plant identified by plant identification information "P011." The judgment information stored by the judgment information memory unit 12b is stored each time judgment information is output by the judgment unit 13b, and is accumulated as a history of judgment results.

### 2-2-2-3. Error Information Memory Unit 12c

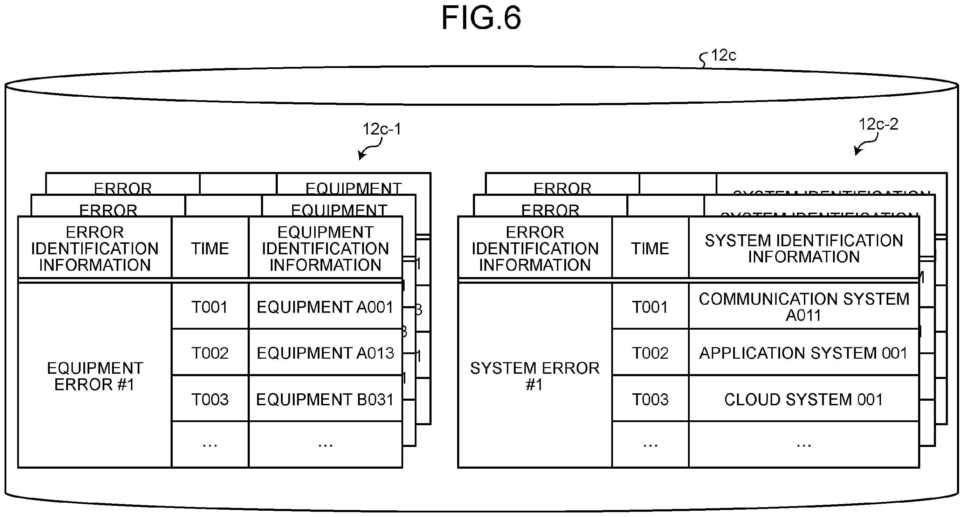

The error information memory unit 12c stores therein system error information output by a detection unit 13c of the control unit 13 described below. Herein, FIG. 6 is used to illustrate an example of the information stored by the error information memory unit 12c. FIG. 6 is a diagram illustrating an example of the error information memory unit 12c of the application server 10 according to the embodiment. In the example in FIG. 6, the error information memory unit 12c includes device error information 12c-1, which is error information of a device having items such as "error identification information," "time," and "equipment identification information," and system error information 12c-2, which is error information of a system infrastructure having items such as "error identification information," "time," and "system identification information."

The "error identification information" indicates identification information for identifying the type of error, and is, for example, an identification number or identification symbol of the system error. The "time" indicates the time when the system error occurred, and is expressed, for example, as the year, month, day, hour, minute, and second when the error was detected in a device, communication line, software, or cloud infrastructure. The "equipment identification information" indicates identification information for identifying the device (equipment), and is, for example, an identification number or identification symbol of the plant equipment 40. The "system identification information" indicates identification information for identifying the system infrastructure, and is, for example, an identification number or identification symbol of a communication line, application software, or cloud infrastructure.

In other words, to explain the device error information 12c-1, FIG. 6 illustrates an example in which the device in which an error was detected at time "T001" is "equipment A011," the device in which an error was detected at time "T002" is "equipment A013," the device in which an error was detected at time "T003" is "equipment B031," ... for the device error identified by the error identification information "equipment error #1". The device error information 12c-1 stored by the error information memory unit 12c is stored each time a device error is detected, and is accumulated as a history of errors in the entire system.

Also, to explain the system error information 12c-2, FIG. 6 illustrates an example in which the system infrastructure in which an error was detected at time "T001" is "communication system A011," the system infrastructure in which an error was detected at time "T002" is "application system 001," the system infrastructure in which an error was detected at time "T003" is "cloud system 001," ... for the system error identified by the error identification information "system error #1." The system error information 12c-2 stored by the error information memory unit 12c is stored each time an error in the system infrastructure is detected, and is accumulated as a history of errors in the entire system.

### 2-2-2-4. Setting Information Memory Unit 12d

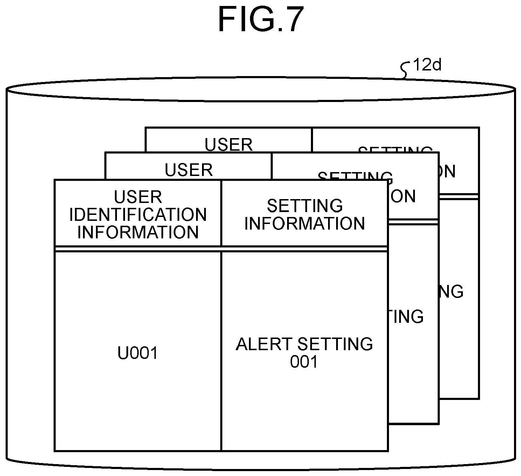

The setting information memory unit 12d stores therein setting information of each user, which is stored by the storage unit 13e of the control unit 13 described below. The setting information memory unit 12d stores therein setting information in which the notification target to be notified to each user is set, for each user of applications related to the system. For example, the setting information memory unit 12d stores therein, for each user, setting information in which errors to be notified among errors that occur in the system infrastructure and abnormal values of data transmitted by devices that are management targets of the user are set. Herein, FIG. 7 is used to illustrate an example of the information stored by the setting information memory unit 12d. FIG. 7 is a diagram illustrating an example of the setting information memory unit 12d of the application server 10 according to the embodiment. In the example in FIG. 7, the setting information memory unit 12d has items such as "user identification information" and "setting information."

The "user identification information" indicates identification information for identifying users, and is, for example, an identification number or identification symbol of a business that uses the application executed by the application server 10. The "setting information" indicates alert notification targets set by a user, and is, for example, a list of error types for which alert notifications are requested and types of data judgment results.

In other words, FIG. 7 illustrates an example in which the setting information is "alert setting 001" for the user identified by the user identification information "U001." The setting information stored by the setting information memory unit 12d is updated each time the user changes the alert settings. The setting information memory unit 12d can also store therein alert information (system errors, abnormal data values, for example) to be notified by a notification unit 13f of the control unit 13 described below.

### 2-2-3. Control Unit 13

The control unit 13 is responsible for control of the entire application server 10. The control unit 13 has a collection unit 13a, the judgment unit 13b, the detection unit 13c, an acquisition unit 13d, the storage unit 13e, and the notification unit 13f. Herein, the control unit 13 can be implemented, for example, as an electronic circuit such as a central processing unit (CPU) or micro processing unit (MPU), or an integrated circuit such as an application specific integrated circuit (ASIC) or field programmable gate array (FPGA).

### 2-2-3-1. Collection Unit 13a

The collection unit 13a collects the data transmitted by devices. For example, the collection unit 13a collects plant information transmitted by the plant equipment 40, including communication equipment, sensor equipment, or control equipment installed in the plant. Using a specific example for explanation, the collection unit 13a collects communication data from the gateway equipment 41, which is communication equipment, collects measurement data from the sensor equipment 42, which is measurement equipment, and collects control data from the control equipment 43.

### 2-2-3-2. Judgment Unit 13b

The judgment unit 13b judges the collected data to be abnormal when the data exceeds a predetermined threshold, and outputs judgment information. For example, the judgment unit 13b judges the collected plant information to be an abnormal value when the plant information exceeds a predetermined threshold, and outputs judgment information. Using a specific example for explanation, the judgment unit 13b judges the measurement data collected from sensor equipment 42A to be an abnormal value when the measurement data exceeds a predetermined threshold, and outputs judgment information {time: T001, judgment result: judgment result #1}.

### 2-2-3-3. Detection Unit 13c

The detection unit 13c detects the occurrence of an error in the system and outputs error information. For example, the detection unit 13c detects, as an error, the occurrence of a failure of a device, communication line, software, or cloud infrastructure constituting the system. Using a specific example for explanation, the detection unit 13c detects an error when a failure of the sensor equipment 42A occurs, and outputs error information {time: T001, equipment identification information: device A001}.

### 2-2-3-4. Acquisition Unit 13d

The acquisition unit 13d acquires configuration information of the system. For example, the acquisition unit 13d acquires a network map for understanding the hierarchical relation, connection relation, and the like of the plant equipment 40 included in the system. Using the example illustrated in FIG. 3 for explanation, the acquisition unit 13d acquires, as a network map, configuration information as follows: {plant A: gateway equipment 41A (sensor equipment 42A-1, sensor equipment 42A-2, control equipment 43A-1), gateway equipment 41A (sensor equipment 42A-3, control equipment 43A-2)}, {plant B: gateway equipment 41B (sensor equipment 42B-1, sensor equipment 42B-2, control equipment 43B)}.

The acquisition unit 13d also acquires configuration information of the system when an error occurred and when an abnormal value occurred. For example, if an error occurs in a system, such as a device, communication network, software, or cloud infrastructure, the acquisition unit 13d acquires, from the administrator terminal 20, configuration information of the system at the time when the error occurred. If an abnormal value of a device of the plant equipment 40 (gateway equipment 41, sensor equipment 42, control equipment 43) occurs, the acquisition unit 13d acquires, from the user terminal 30, configuration information of the system at the time when the abnormal value occurred. The acquisition unit 13d may also periodically acquire configuration information of the system from the administrator terminal 20 or a predetermined database, even when no errors or abnormal values have occurred.

### 2-2-3-5. Storage Unit 13e

The storage unit 13e stores the acquired configuration information of the system. For example, the storage unit 13e stores, in the configuration information memory unit 12a, the network map for understanding the hierarchical relation, connection relation, and the like of the plant equipment 40 included in the system, the network map having been acquired by the acquisition unit 13d.

The storage unit 13e stores the output judgment information. For example, the storage unit 13e stores, in the judgment information memory unit 12b, the judgment information including abnormal values of the plant equipment 40, the judgment information having been output by the judgment unit 13b.

The storage unit 13e stores output detection information. For example, the storage unit 13e stores, in the error information memory unit 12c, detection information including errors in the system, such as a device, communication network, software, or cloud infrastructure, the detection information having been output by the detection unit 13c.

Furthermore, the storage unit 13e stores, in the memory unit 12, an error history in which the error information indicating errors is associated with the configuration information of the system, and an abnormal value history in which the judgment information indicating abnormal values is associated with the configuration information of the system. Using a specific example for explanation, the storage unit 13e stores, as the error history, {error information: equipment A011, configuration information: system configuration 001} in the error information memory unit 12c. The storage unit 13e also stores, as the abnormal value history, {judgment result: judgment result #1, configuration information: system configuration 001} in the judgment information memory unit 12b.

### 2-2-3-6. Notification Unit 13f

When an abnormality occurs in the system, the notification unit 13f notifies the administrator of the system of the abnormality, and also controls the notification of the abnormality for each user, based on the configuration information. For example, when an error occurs, the notification unit 13f notifies the administrator and the user who sets the error as the notification target, and when an abnormal value occurs, the notification unit 13f notifies the administrator and the user who sets the abnormal value as the notification target.

The following uses a specific example for explanation. Assume, as abnormalities that occur in the system, that, among the plant equipment 40 to be monitored by the user, "error A," which is an abnormal value of the gateway equipment 41, "error B," which is an abnormal value of the sensor equipment 42, and "error C," which is an abnormal value of the control equipment 43, occurred, and that "error A," which is an failure of the plant equipment 40, "error B," which is a tight communication network, "error C," which is an application software defect, and "error D," which is lack of cloud infrastructure resources, occurred. At this time, the notification unit 13f notifies the administrator's administrator terminal 20 of all abnormal values ("abnormal value A," "abnormal value B," and "abnormal value C") and all errors ("error A," "error B," "error C," and "error D"). Meanwhile, in a case where the user has set {gateway equipment 41, control equipment 43} for abnormal values and {communication system, application system, cloud system} for errors as the notification targets for which alert notifications are requested in the setting information, the notification unit 13f notifies the user's user terminal 30 of "abnormal value A" and "abnormal value C" for abnormal values, and "error B," "error C," and "error D" for errors.

As described above, in a case where the notification unit 13f has set alerts for device types or system types, the notification unit 13f can control the notification for each such type. In a case where the notification unit 13f has set alerts for specific devices, specific times of the year, or specific locations as exclusion targets, the notification unit 13f can transmit alert notifications regarding targets other than those exclusion targets.

When the notification unit 13f receives a request to refer to an error or abnormal value from the administrator, the notification unit 13f refers to the error history or abnormal value history stored in the memory unit 12, identifies the system configuration information associated with the error information or judgment information included in the reference request, and notifies the administrator of the identified system configuration information.

Using a specific example for explanation, when the notification unit 13f receives a request to refer to the error of "plant A" from the administrator, the notification unit 13f notifies the administrator terminal 20 of the error history {error information: equipment A011, configuration information: system configuration 001} including the error information of the plant equipment 40A in "plant A" stored in the error information memory unit 12c, and notifies the administrator terminal 20 of "system configuration 001," which is the configuration information of the system at the time of the error occurrence. When the notification unit 13f receives a request to refer to the abnormal value of "plant A" from the administrator, the notification unit 13f refers to {judgment result: judgment result #1, configuration information: system configuration 001} as the abnormal value history including the judgment information of plant equipment 40A in "plant A" stored in the judgment information memory unit 12b, and notifies the administrator terminal 20 of "system configuration 001," which is the configuration information of the system when the abnormal value occurred.

### 2-3. Exemplary Configuration of Administrator Terminal 20

FIG. 2 is used to illustrate an exemplary configuration of the administrator terminal 20. For example, the administrator terminal 20 can be implemented as a notebook personal computer (PC), desktop PC, smartphone, tablet terminal, cellular phone, or personal digital assistant (PDA). The administrator terminal 20 has an input/output unit 21 and a transmission/reception unit 22.

### 2-3-1. Input/Output Unit 21

The input/output unit 21 is responsible for controlling input of various information to the administrator terminal 20. The input/output unit 21 is, for example, a mouse or keyboard, and receives input of search conditions and the like to the administrator terminal 20. The input/output unit 21 is responsible for controlling output of various information from the administrator terminal 20. The input/output unit 21 is, for example, a display, and outputs abnormal values in the plant, system errors, and the like.

### 2-3-2. Transmission/Reception Unit 22

The transmission/reception unit 22 transmits various information. For example, the transmission/reception unit 22 transmits, to the application server 10, a request to refer to configuration information. The transmission/reception unit 22 also receives various information. For example, the transmission/reception unit 22 receives judgment information, error information, and the like transmitted by the application server 10.

### 2-3-3. Specific Example of Display Screen of Administrator Terminal 20

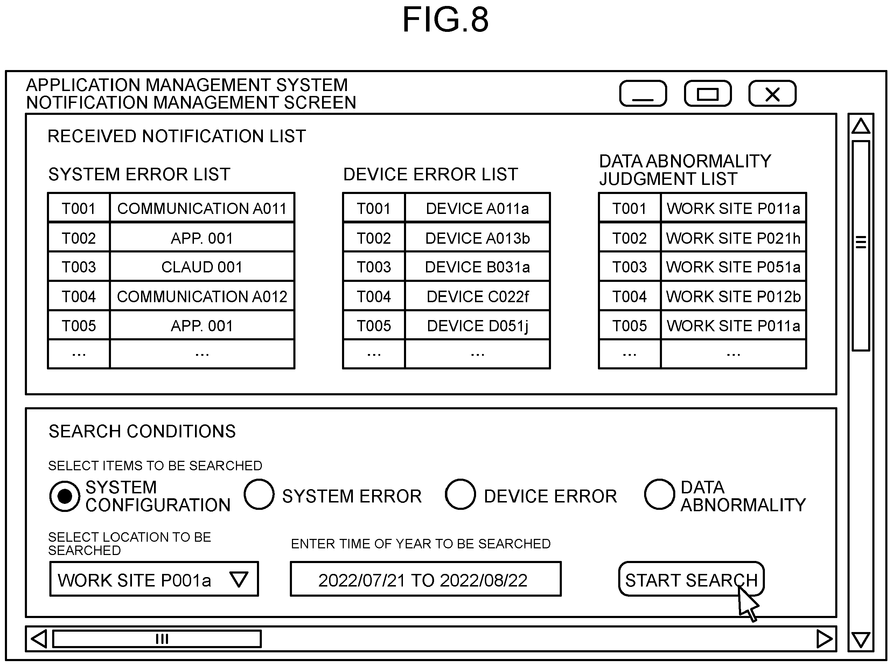

Herein, FIG. 8 is used to illustrate a specific example of a display screen output by the input/output unit 21 of the administrator terminal 20. FIG. 8 is a diagram illustrating the specific example of the display screen of the administrator terminal 20 according to the embodiment. The following describes the "received notification list" and "search conditions" in the "application management system notification management screen" in this order.

### 2-3-3-1. Received Notification List

As illustrated in FIG. 8, the administrator terminal 20 displays the "received notification list" screen, which is a list of notifications received from the application server 10. In the example in FIG. 8, the administrator terminal 20 displays the "system error list," which is a notification regarding system infrastructure errors, in the order of occurrence of errors, the "device error list," which is a notification regarding device errors, in the order of occurrence of errors, and the "data abnormality judgment list," which is a notification regarding the judgment results of data, in the order of occurrence of abnormal values. At this time, the administrator can view the details of the notification regarding the selected item by clicking on some selected item in the displayed lists.

### 2-3-3-2. Search Conditions

As illustrated in FIG. 8, the administrator terminal 20 displays "search conditions," which are conditions to be entered to analyze errors and the like that have occurred. In the example in FIG. 8, the administrator terminal 20 displays radio buttons that allow selection of "system configuration," "system error," "device error," and "data abnormality" as items to be searched (search target selection). The administrator terminal 20 also displays a pull-down menu from which the location to be searched can be selected and a text box into which the time of year to be searched can be entered (search range selection). At this time, the administrator can search the "system configurations," which are the configuration information of the system at "work site P001a" and during "2022/07/21 - 2022/08/22" by clicking the "Start search" button.

### 2-3-3-3. Others

In a similar manner, the administrator can search for "system error," which are errors in the system infrastructure that occurred at a predetermined location and during a predetermined period, "device error," which are device errors that occurred at a device location and during a device period, and "data abnormality," which are abnormal values that occurred at a predetermined location and during a predetermined period.

### 2-4. Exemplary Configuration of User Terminal 30

FIG. 2 is used to illustrate an exemplary configuration of the user terminal 30. For example, the user terminal 30 can be implemented as a notebook PC, desktop PC, smartphone, tablet terminal, cellular phone, or PDA. The user terminal 30 has an input/output unit 31 and a transmission/reception unit 32.

### 2-4-1. Input/Output Unit 31

The input/output unit 31 is responsible for controlling input of various information to the user terminal 30. The input/output unit 31 is, for example, a mouse or keyboard, and receives input of setting information and the like regarding alarm notifications to the user terminal 30. The input/output unit 31 is responsible for controlling output of various information from the user terminal 30. The input/output unit 31 is, for example, a display, and outputs abnormal values in the plant, system errors, and the like.

### 2-4-2. Transmission/Reception Unit 32

The transmission/reception unit 32 transmits various information. For example, the transmission/reception unit 32 transmits, to the application server 10, setting information and the like regarding alarm notifications. The transmission/reception unit 32 also receives various information. For example, the transmission/reception unit 32 receives judgment information, error information, and the like transmitted by the application server 10.

### 2-4-3. Specific Example of Display Screen of User Terminal 30

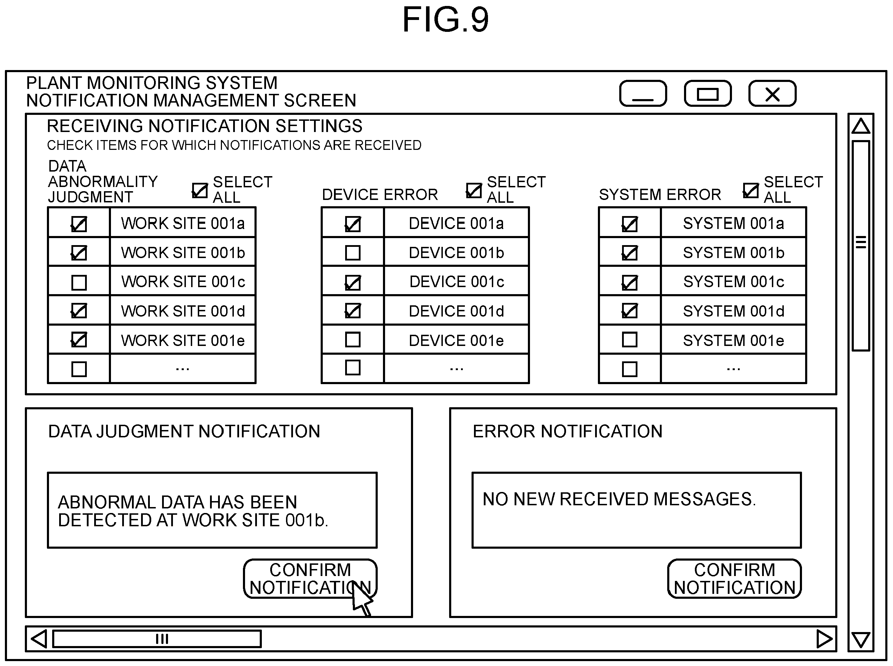

Herein, FIG. 9 is used to illustrate a specific example of a display screen output by the input/output unit 31 of the user terminal 30. FIG. 9 is a diagram illustrating the specific example of the display screen of the user terminal 30 according to the embodiment. The following describes the "receiving notification settings," "data judgment notification," and "error notification" in the "plant monitoring system notification management screen" in this order.

### 2-4-3-1. Receiving Notification Settings

As illustrated in FIG. 9, the user terminal 30 displays "receiving notification settings," which is a screen for setting alert notifications to be received from the application server 10. In the example in FIG. 9, the user terminal 30 displays the "data abnormality judgment" setting screen for selecting alert notifications regarding data judgment results, the "device error" setting screen for selecting alert notifications regarding device errors, and the "system error" setting screen for selecting alert notifications regarding system infrastructure errors. At this time, the user can set up to receive alert notifications by checking the items displayed.

### 2-4-3-2. Data Judgment Notification

As illustrated in FIG. 9, the user terminal 30 displays "data judgment notification," which is a screen that displays an alert notification regarding the data judgment received from the application server 10. In the example in FIG. 9, the user terminal 30 displays "Abnormal data has been detected at work site 001b" as an alert notification regarding the data judgment result. At this time, the user can receive the latest alert notification by clicking the "Confirm notification" button.

### 2-4-3-3. Error Notification

As illustrated in FIG. 9, the user terminal 30 displays "error notification," which is a screen that displays an alert notification regarding an error in the entire system received from the application server 10. In the example in FIG. 9, the user terminal 30 displays "No new received messages" as an alert notification regarding the error in the entire system. At this time, the user can receive the latest alert notification by clicking the "Confirm notification" button.

### 2-5. Exemplary Configuration of Plant Equipment 40

FIG. 2 is used to illustrate an exemplary configuration of the plant equipment 40. For example, the plant equipment 40 is made up of the gateway equipment 41, which is communication equipment, the sensor equipment 42, which is measurement equipment, and the control equipment 43, which is responsible for control of the plant equipment.

The gateway equipment 41 collects communication data. For example, the gateway equipment 41 collects the amount of packet communication data for each plant. The sensor equipment 42 collects measurement data. For example, the sensor equipment 42 collects temperature data, flow velocity data, and pressure data for each plant process. The control equipment 43 collects control data. For example, the control equipment 43 collects control signals for the gateway equipment 41 and the sensor equipment 42 for each plant.

### 3. Processing Flow of Information Management System 100

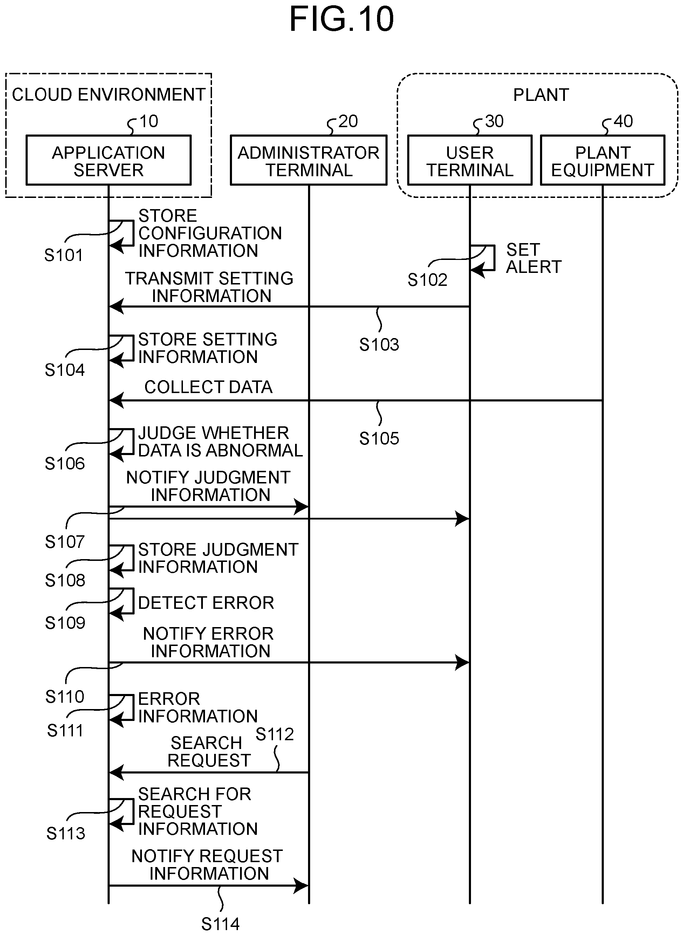

FIG. 10 is used to illustrate the flow of processing performed by the information management system 100 according to the embodiment. FIG. 10 is a sequence diagram illustrating an example of the processing flow according to the embodiment. Processing at the following steps S101-S114 can be performed in a different order. Some of the processing at the following steps S101-S114 may be omitted.

### 3-1. Configuration Information Control Processing

The application server 10 stores therein configuration information of the system (step S101). For example, the application server 10 acquires, from the administrator terminal 20, the configuration information of the system at the time of the error occurrence, and stores the configuration information in the configuration information memory unit 12a.

### 3-2. Setting Information Control Processing

First, the user terminal 30 sets alert notifications (step S102). For example, the user terminal 30 generates, in response to user input, setting information in which abnormal values and errors for which alert notifications are requested have been selected. Second, the user terminal 30 transmits the setting information (step S103). For example, the user terminal 30 transmits, to the application server 10, the setting information in which abnormal values and errors for which alert notifications are requested have been selected. Third, the application server 10 stores therein the setting information (step S104). For example, the application server 10 stores the setting information received from the user terminal 30 in the setting information memory unit 12d for each user.

### 3-3. Judgment Information Control Processing

First, the application server 10 collects data from a device (step S105). For example, the application server 10 collects plant information from the plant equipment 40. Second, the application server 10 judges whether the data is normal or abnormal (step S106). For example, the application server 10 judges that the plant information is an abnormal value if the plant information exceeds a predetermined threshold. Third, the application server 10 notifies the judgment information (step S107). For example, the application server 10 transmits all judgment information to the administrator terminal 20, and transmits, to the user terminal 30, judgment information on notification targets for which the user has set alert notifications. Fourth, the application server 10 stores therein the judgment information (step S108). For example, the application server 10 stores judgment information, which is a history of abnormal values, in the judgment information memory unit 12b for each plant.

### 3-4. Error Information Control Processing

First, the application server 10 detects system errors (step S109). For example, the application server 10 detects abnormalities in devices, communications, applications, and cloud environments. Second, the application server 10 notifies error information (step S110). For example, the application server 10 transmits all error information to the administrator terminal 20, and transmits, to the user terminal 30, error information on notification targets for which the user has set alert notifications. Third, the application server 10 stores therein error information (step S111). For example, the application server 10 stores error information, which is a history of errors in the entire system, in the error information memory unit 12c for each type of error.

### 3-5. Search Information Control Processing

First, the administrator terminal 20 transmits a search request (step S112). For example, the administrator terminal 20 requests the application server 10 to search for the configuration information of the system when abnormal values or errors occur. Second, the application server 10 searches for request information (step S113). For example, the application server 10 searches for the system configuration information transmitted from the administrator terminal 20 as the request information. Third, the application server 10 notifies the request information (step S114). For example, the application server 10 transmits the identified configuration information to the administrator terminal 20 as the request information.

### 4. Effects of Embodiment

Finally, the effects of the embodiment will be described. The following describes effects 1-7 corresponding to the processing according to the embodiment.

### 4-1. Effect 1

First, in the processing according to the embodiment described above, the application server 10 stores therein setting information in which the notification target to be notified to each user is set for each user of the applications related to the system, and notifies, when an abnormality occurs in the system, the system administrator of the abnormality, and also controls the notification of the abnormality for each user, based on the setting information. Thus, this processing can effectively provide information about the system to each user.

### 4-2. Effect 2

Second, in the processing according to the embodiment described above, the application server 10 stores therein, for each user, setting information in which errors to be notified among errors that occur in the system infrastructure and abnormal values of data transmitted by devices that are management targets of the user are set, notifies, when an error occurs, the administrator and the user who sets the error as the notification target, and notifies, when an abnormal value occurs, the administrator and the user who sets the abnormal value as the notification target. Thus, this processing can effectively provide information about the system to each user by making it possible to select the notification target to the user.

### 4-3. Effect 3

Third, in the processing according to embodiment described above, the application server 10 acquires the configuration information of the system when an error occurs and the configuration information of the system when an abnormal value occurs, and stores, in the memory unit 12, an error history in which the error information indicating errors is associated with the configuration information of the system, and an abnormal value history in which the judgment information indicating abnormal values is associated with the configuration information of the system. Thus, this processing can effectively provide information about the system to each user by maintaining the system configuration at the time when an abnormality occurred in a searchable manner. For example, when errors in the past are searched for, this processing makes it possible to clearly understand whether an error occurred in a similar system configuration in the past because the history is managed by linking it to the system configuration information even if the system configuration was changed halfway.

### 4-4. Effect 4

Fourth, in the processing according to the embodiment described above, when the application server 10 receives a request to refer to an error or abnormal value from the administrator, the application server 10 refers to the error history or abnormal value history stored in the memory unit 12, identifies the system configuration information associated with the error information or judgment information included in the reference request, and notifies the administrator of the identified system configuration information. Thus, this processing can effectively provide information about the system to each user by providing the administrator with the system configuration when an abnormality occurred.

### 4-5. Effect 5

Fifth, in the processing according to the embodiment described above, the application server 10 collects data transmitted by devices, judges the collected data to be an abnormal value and outputs judgment information when the collected data exceeds a predetermined threshold, and detects the occurrence of an error in the system and outputs error information. Thus, this processing can effectively provide information about the system to each user by executing the judgment of abnormal values and detection of errors.

### 4-6. Effect 6

Sixth, in the processing according to the embodiment described above, the application server 10 collects plant information transmitted by the plant equipment 40, including communication equipment, sensor equipment, or control equipment installed in the plant, and judges the collected plant information to be an abnormal value and outputs judgment information when the collected plant information exceeds a predetermined threshold. Thus, this processing can effectively provide information about the system to each user by executing the judgment of abnormal values and detection of errors in the plant.

### 4-7. Effect 7

Seventh, in the processing according to the embodiment described above, the application server 10 detects, as an error, the occurrence of a failure of a device, communication line, software, or cloud infrastructure constituting the system. Thus, this processing can effectively provide information about the system to each user by executing the judgment of abnormal values and detection of errors in the cloud environment.

### System

The processing sequence, the control sequence, the specific names, and information including various types of data and parameters indicated above or in the drawings may be changed in any way, unless specified otherwise.

The elements of each of the devices illustrated are merely functional and conceptual representations, and do not always need to be physically configured in the manner illustrated. In other words, specific configurations in which the devices are distributed or integrated are not limited those illustrated in the drawings. To put it in other words, whole or a part thereof may be functionally or physically distributed or integrated into any units, depending on various loads and utilizations.

Furthermore, whole or any part of the processing functions executed in each of the devices may be implemented as a CPU and a computer program parsed and executed by the CPU, or as hardware using wired logics.

### Hardware

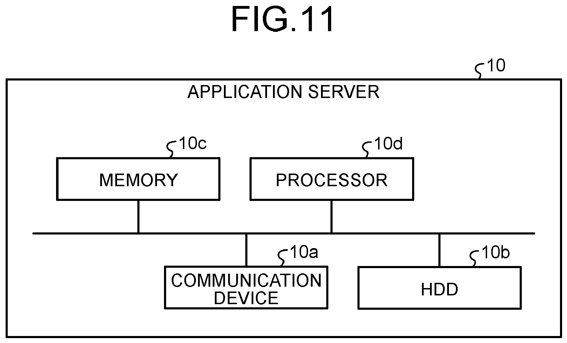

An exemplary hardware configuration of the application server 10, which is an information management apparatus, will be described next. Other devices such as the administrator terminal 20 can have the same hardware configuration. FIG. 11 is a schematic for explaining the exemplary hardware configuration. As illustrated in FIG. 11, the application server 10 has a communication device 10a, a hard disk drive (HDD) 10b, a memory 10c, and a processor 10d. The units illustrated in FIG. 11 are connected to one another via a bus, for example.

The communication device 10a is a network interface card, for example, and communicates with another server. The HDD 10b stores therein a computer program for operating the functions illustrated in FIG. 2 and a database (DB).

The processor 10d runs processes for performing the functions explained with reference to FIG. 2 or the like, by reading a computer program for executing processing that is the same as that executed by the processing units illustrated in FIG. 2 from the HDD 10b, for example, and loading the computer program onto the memory 10c. For example, this process performs the same functions as those performed by the processing units included in the application server 10. Specifically, the processor 10d reads a computer program having the same functions as those of the collection unit 13a, the judgment unit 13b, the detection unit 13c, the acquisition unit 13d, the storage unit 13e, and the notification unit 13f, for example, from the HDD 10b or the like. The processor 10d then performs the process for performing the same process as those performed by the collection unit 13a, the judgment unit 13b, the detection unit 13c, the acquisition unit 13d, the storage unit 13e, the notification unit 13f, and the like.

By reading and executing a computer program in the manner described above, the application server 10 operates as an apparatus executing various processing method. The application server 10 may also implement the functions that are the same as those described in the embodiment, by causing a medium reading device to read the computer program described above from a recording medium, and by executing the computer program. The computer program mentioned in this other embodiment is not limited to that executed by the application server 10. For example, the present invention may be applied in the same manner in configurations in which another computer or a server executes the computer program, or in which these devices execute the computer program by cooperating with each other.

This computer program may be distributed over a network such as the Internet. For example, this computer program may be stored in a computer-readable recording medium such as a hard disk, a flexible disk (FD), a compact disc read-only memory (CD-ROM), a magneto-optical disc (MO), or a digital versatile disc (DVD), and executed by a computer having read the computer program from the recording medium.

The present invention has the effect of effectively providing information about the system to each user.

## Claims

1. An information management apparatus (10) comprising:
a memory unit (12) configured to store setting information in which a notification target to be notified to each of users is set, for each user of an application related to a system; and
a notification unit (13f) configured to notify, when an abnormality occurs in the system, an administrator of the system of the abnormality and also to control notification of the abnormality for each of the users, based on the setting information.

2. The information management apparatus (10) according to claim 1, wherein
the memory unit (12) stores, for each of the users, the setting information in which, among errors that occur in an infrastructure of the system, the error set as the notification target and an abnormal value of data transmitted by a device that is a management target of the user are set, and
the notification unit (13f) notifies, when the error occurs, the administrator and the user who sets the error as the notification target, and notifies, when the abnormal value occurs, the administrator and the user who sets the abnormal value as the notification target.

3. The information management apparatus (10) according to claim 1 or 2 further including:
an acquisition unit (13d) configured to acquire configuration information of the system when an error set as the notification target occurred and configuration information of the system when an abnormal value of data transmitted by a device occurred; and
a storage unit (13e) configured to store, in the memory unit, an error history in which error information indicating the error is associated with the configuration information of the system, and an abnormal value history in which judgment information indicating the abnormal value is associated with the configuration information of the system.

4. The information management apparatus (10) according to claim 3, wherein, when the notification unit (13f) receives a request to refer to the error or the abnormal value from the administrator, the notification unit (13f) refers to the error history or the abnormal value history stored in the memory unit (12), identifies the configuration information of the system associated with the error information or the judgment information included in the reference request, and notifies the administrator of the identified configuration information of the system.

5. The information management apparatus (10) according to any one of claims 2 to 4, further including:
a collection unit (13a) configured to collect the data transmitted by the device;
a judgment unit (13b) configured to judge the collected data to be the abnormal value and to output judgment information when the collected data exceeds a predetermined threshold; and
a detection unit (13c) configured to detect occurrence of the error in the system and to output error information.

6. The information management apparatus (10) according to claim 5, wherein
the collection unit (13a) collects plant information transmitted by plant equipment (40), including communication equipment, sensor equipment, or control equipment, installed in a plant, and
the judgment unit (13b) judges the collected plant information to be the abnormal value and outputs the judgment information when the collected plant information exceeds a predetermined threshold.

7. The information management apparatus (10) according to claim 5, wherein the detection unit (13c) detects, as the error, occurrence of a failure of a device, communication line, software, or cloud infrastructure constituting the system.

8. An information management method by which a computer (10) executes processing comprising:
storing setting information in which a notification target to be notified to each of users is set for each user of an application related to a system; and
notifying, when an abnormality occurs in the system, an administrator of the system of the abnormality, and also controlling notification of the abnormality for each of the users, based on the setting information.

9. An information management program causing a computer (10) to execute processing comprising:
storing setting information in which a notification target to be notified to each of users is set for each user of an application related to a system; and
notifying, when an abnormality occurs in the system, an administrator of the system of the abnormality, and also controlling notification of the abnormality for each of the users, based on the setting information.
